(19) Europäisches Patentamt
European Patent Office
Office européen des brevets

(11) **EP 3 660 532 B1**

(12) **EUROPÄISCHE PATENTSCHRIFT**

(45) Veröffentlichungstag und Bekanntmachung des Hinweises auf die Patenterteilung:
**14.09.2022   Patentblatt 2022/37**

(21) Anmeldenummer: **18208560.5**

(22) Anmeldetag: **27.11.2018**

(51) Internationale Patentklassifikation (IPC):
**G01S 3/04** *(2006.01)*      **G01S 3/46** *(2006.01)*

(52) Gemeinsame Patentklassifikation (CPC):
**G01S 3/043; G01S 3/46**

(54) **VERFAHREN, EINRICHTUNG UND ANORDNUNG ZUR BESTIMMUNG DES EINFALLSWINKELS (AOA) ZUR LOKALISIERUNG VON OBJEKTEN**

METHOD, DEVICE AND SYSTEM FOR DETERMINING THE ANGLE OF ARRIVAL (AOA) FOR LOCATING AN OBJECT

PROCÉDÉ, DISPOSITIF ET AGENCEMENT DE DÉTERMINATION DE L'ANGLE D'INCIDENCE (AOA) PERMETTANT DE LOCALISER DES OBJETS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**03.06.2020   Patentblatt 2020/23**

(73) Patentinhaber: **Safectory GmbH**
**96047 Bamberg (DE)**

(72) Erfinder:
• **Dorn, Christian**
**91058 Erlangen (DE)**
• **Erhardt, Stefan**
**91096 Möhrendorf (DE)**

(74) Vertreter: **Stippl Patentanwälte**
**Freiligrathstraße 7a**
**90482 Nürnberg (DE)**

(56) Entgegenhaltungen:
**EP-A1- 2 799 895        EP-B1- 2 799 895**
**WO-A1-00/69198         US-A- 5 497 161**
**US-A1- 2018 203 091**

**Beschreibung**

Die vorliegende Erfindung betrifft ein Verfahren zur Bestimmung des Einfallswinkels (AOA) eines Funksignals gemäß dem Oberbegriff des Anspruchs 1. Ferner betrifft die vorliegende Erfindung eine Einrichtung gemäß Anspruch 9 sowie eine Anordnung gemäß Anspruch 13.

Technologischer Hintergrund

Durch die Fortschritte der Digitalisierung werden zunehmend Versuche unternommen die online und die offline Welt miteinander zu verbinden. So stellt sich die Aufgabe, Objekte und Orte aus der realen Welt mit einer virtuellen Repräsentation zu verbinden. Gute Kenntnisse der Position von Objekten in der realen Welt sind somit sehr wichtig, wenn es um eine virtuelle Integration des physischen Objekts geht. Die bekannteste Bemühung in diesem Gebiet ist die Digitalisierung der physischen Position eines Objekts, um die Benutzererfahrung zu steigern oder um Objekte zu erfassen und zu verfolgen.

Das Global Positioning System (GPS) stellt eine Möglichkeit dar, um die Position von Objekten zu bestimmen. Allerdings kommt es zu gravierenden Einschränkungen, wenn das System in geschlossenen Räumen angewendet werden soll. Denn die hohe Dämpfung der GPS-Frequenzbänder durch Baustoffe erfordert hochempfindliche Empfänger, die teuer und damit nicht sehr verbreitet sind.

Eine weitere Möglichkeit stellen Radarsysteme dar, welche allerdings schwierig in der Handhabung und teuer in der Produktion sind, so dass auch diese, obwohl sie eine hohe Präzision bieten, nicht für die Navigation in Innenräumen geeignet sind.

Der beste Kompromiss zwischen Vielseitigkeit und Preis ist jedoch die Wiederverwendung von Technologien, die häufig in Radaranwendungen verwendet werden, auf normalen niederfrequenten HF-Systemen. Viele Möglichkeiten zur Messung von Abstand und Winkel der eingehenden Radiowellen können in niederfrequenten HF-Bändern analog genutzt werden. Die vielversprechendsten Anwendungen sind jedoch ressourcenmäßig begrenzt, da sie auf Smartphones oder anderen tragbaren Geräten laufen müssen.

Nächstliegender Stand der Technik

Eine Vorrichtung zum Messen eines Einfallswinkels (AOA) gemäß dem Oberbegriff des Anspruchs 1 ist aus der US 5,497,161 bekannt. Hierbei werden Signalverarbeitungsmittel beschrieben, welche die Verarbeitung mittels FFT umfassen. Zudem werden die durch die Mehrzahl an Antennen eingehenden Signale durch Verzögerungsmittel quasi-gleichzeitig abgetastet, wodurch eine entsprechend höhere Abtastrate der Signalverarbeitungsmittel notwendig ist.

Die US 2018/0203091 A1 beschreibt eine Methode sowie Vorrichtung, welche die Verwendung einer Vielzahl von Analog-Digital-Wandlern (ADCs) umfasst, die jeweils ein an einer Antenne empfangenes Signal abtasten, wobei die Ausgänge der ADCs verarbeitet werden, um bestimmte Signale auf der Grundlage eines Schwellenwerts zu erkennen. Für jede der Antennen tastet ein entsprechender ADC die empfangenen Signale ab, wobei die Ausgänge der ADCs verarbeitet werden, um einen Ankunftswinkel für mindestens ein erfasstes Signal von Interesse unter Verwendung der Phaseninterferometrie zu berechnen.

Aufgabe der vorliegenden Erfindung

Die Aufgabe der vorliegenden Erfindung besteht darin, ein neuartiges Verfahren, eine Einrichtung sowie eine Anordnung zur Verfügung zu stellen, bei dem bei einer vorteilhaften Energieeffizienz gleichzeitig eine erhöhte Betriebsflexibilität bei verringerten Kosten ermöglicht wird.

Lösung der Aufgabe

Die vorstehende Aufgabe wird durch die gesamte Lehre des Anspruchs 1 sowie durch eine Einrichtung gemäß Anspruch 9 sowie eine Anordnung gemäß Anspruch 13 gelöst. Zweckmäßige Ausgestaltungen der Erfindung sind in den Unteransprüchen beansprucht.

Erfindungsgemäß ist ein Verfahren zum Messen eines Einfallswinkels (AOA, angle of arrival) eines eingehenden Signals vorgesehen unter Verwendung von m voneinander getrennten Antennen, wobei m eine ganze Zahl größer eins ist, wobei die Antennen über Schaltmittel mit einer einzigen Empfangseinrichtung gekoppelt sind, wobei die Schaltmittel elektronische Mittel zum sequentiellen Zuführen des eingehenden Signals, wie es an den m Antennen empfangen wird, an die Empfangseinrichtung umfassen, wobei eine Abtastung mit einer Abtastrate und Zykluszeit in sich wiederholenden Zyklen des eingehenden Signals, wie es an den m Antennen empfangen wird, vorgenommen wird, wobei die Empfangseinrichtung Mittel zur Erzeugung von Basisbandsignalen mit In-Phase-Komponente und mit Quadraturkomponente (IQ-Daten) aus dem eingehenden Signal und zur Weiterleitung dieser an je einen Analog-Digital-Wandler umfasst, um digitalisierte Abtastungen für jede der m Antennen in jedem Zyklus bereitzustellen; wobei Signalverarbeitungsmittel enthalten sind, die mit dem jeweiligen Analog-Digital-Wandler gekoppelt sind, um die digitalisierten Abtastungen zu analysieren und den Einfallswinkel des eingehenden Signals zu bestimmen, wobei die Abtastrate des Signalverarbeitungsmittels kleiner ist als die Anzahl der Antennen m multipliziert mit der Mindestabtastrate, die zur eindeutigen Rekonstruktion der Eingangssignale der einzelnen Antennen m notwendig ist und der entstehende Phasenfehler durch Mehrfachabtastung mindestens einer Antenne und Signalverarbeitung durch ein statistisches Verfahren kompensiert wird.

Ein Kriterium zur eindeutigen Rekonstruktion der Eingangssignale kann das Nyquist-Shannon-Abtasttheorem sein. Demnach kann ein auf eine Maximalfrequenz $f_{max}$ bandbegrenztes Signal aus einer Folge von äquidistanten Abtastwerten exakt rekonstruiert werden, sofern es mit einer Frequenz größer als der doppelten Maximalfrequenz $2f_{max}$ abgetastet wurde.

Um die Phase einer Antenne zu bestimmen, kann eine Phasensequenz $\varphi[n]$ aus den IQ-Daten berechnet werden. Ausgehend von der Phasensequenz $\varphi[n]$ kann ein statistisches Verfahren angewendet werden, um einen entstandenen Phasenfehler zu kompensieren.

Der entstehende Phasenfehler kann ferner durch Mehrfachabtastung mindestens einer Antenne abgeschätzt werden. Hierfür kann beispielsweise die erste Antenne für eine doppelte Zykluszeit $t_z$ abgetastet werden. Die Phase kann anschließend für jede Zykluszeit $t_z$ einzeln bestimmt werden und der Phasenfehler durch $\varphi_{err} = \varphi_1 - \varphi_0$ bestimmt werden, wobei $\varphi_1$ und $\varphi_0$ die geschätzten Phasen für die Intervalle $t_1$ und $t_0$ darstellen.

Durch das erfindungsgemäße Verfahren können somit Signalverarbeitungsmittel mit geringerer Abtastrate verwendet werden, so dass kostengünstigere Komponenten möglich sind.

Erfindungsgemäß umfasst das statistische Verfahren die Verwendung eines gleichmäßigen besten erwartungstreuen Schätzers. Bei der Verwendung eines Schätzers ist es wichtig zu wissen, wie "gut" die Ergebnisse dieses Schätzers sind. "Gute" Schätzer weisen keinen systematischen Fehler auf und deren geschätzter Wert liegt im Schnitt näher an dem zu schätzenden Wert als bei anderen erwartungstreuen Schätzern. Die Varianz eines Schätzers kann als Kriterium zur Bestimmung eines guten Schätzers verwendet werden. Gleichmäßig beste erwartungstreue Schätzer besitzen für ein Schätzproblem die kleinste Varianz unter allen erwartungstreuen Schätzern. Ein Schätzer, welcher die Varianz minimiert, wird demnach auch als varianzminimierender Schätzer bzw. Uniformly Minimum Variance Unbiased (UMVU)-Schätzer bezeichnet.

Die Cramer-Rao Ungleichung ist ein Kriterium, um den bestmöglichen Schätzer zu bestimmen. Sie ist ein Maßstab, der die minimale Varianz angibt, die für ein Schätzproblem erreichbar ist. Sie liefert in regulären statistischen Modellen eine Abschätzung für die Varianz von Punktschätzern und somit eine Möglichkeit unterschiedliche Schätzer miteinander zu vergleichen sowie ein Kriterium für die Bestimmung von gleichmäßig besten erwartungstreuen Schätzern.

Besonders vorteilhaft ist es, wenn in den Signalverarbeitungsmitteln eine Phasenenthüllung (phase unwrapping) durchgeführt wird. Durch einen Mischer kann ein bestimmtes Frequenzband mit definierter Bandbreite eines eingehenden Signals in ein höheres oder niedrigeres Frequenzband umgesetzt werden. Hierfür wird das betreffende Frequenzband von der Trägerfrequenz $\omega_0$ des eingehenden Signals zu $\omega = \omega_0 - \omega_{LO}$ verschoben, wobei $\omega_{LO}$ die Frequenz des lokalen Oszillators ist, welche durch die Signalverarbeitungsmittel vorgegeben ist. Es besteht allerdings die Schwierigkeit, den lokalen Oszillator mit dem Trägersignal exakt zu synchronisieren, so dass bei einer nicht perfekten Synchronisation die Phase mit einer konstanten Frequenz $\omega_f$ rotiert. Grundsätzlich könnte die Steigung und der Achsenschnittpunkt für die Phase durch einen Algorithmus, insbesondere durch einen Regressionsalgorithmus, berechnet werden. Allerdings kann das Problem von Unstetigkeiten auftreten, welche beispielsweise durch die Wrapping-Eigenschaften der arctan2-Funktion auftreten. Ein Algorithmus, welcher die Unstetigkeiten in der Phase erkennt und behebt wird als Phasen-Unwrapping-Algorithmus bezeichnet. Diese Art von Algorithmen erkennen Phasensprünge um $\pm 2\pi$ und addieren entsprechend $\mp 2\pi$ auf die folgenden Abtastungen der Phase. Nach dem Unwrapping kann die Phase der einfallenden Radiowelle berechnet werden, indem ein Schätzer für das Regressionsproblem verwendet wird. Dieser Schätzer kann beispielsweise ein gleichmäßig bester erwartungstreuer Schätzer sein.

Zweckmäßigerweise können eingehende Signale unterschiedlicher Frequenzen vorgesehen sein. Objekte in der Umgebung, welche beispielsweise bei einer Frequenz als Störer wirken, können bei einer davon verschiedenen Frequenz nicht mehr als Störer wirken. Durch die Verwendung mehrerer unterschiedlicher Frequenzbänder können negative Ausbreitungseigenschaften, wie z. B. Fading-Effekte minimiert werden, wodurch die Signalqualität und schließlich die Bestimmung des Einfallswinkels verbessert wird. Hierbei können verschiedene Frequenzen auf unterschiedlichen Frequenzbändern verwendet werden. Beispielsweise können die m Antennen in einem Dualband-Betrieb mit zwei unterschiedlichen Frequenzbereichen betrieben werden.

Es kann zudem zweckmäßig sein, wenn sich die Frequenzen mindestens um einen Faktor 2, insbesondere um einen Faktor 3, insbesondere um einen Faktor 4 unterscheiden. Indem der Unterschied in den Frequenzen ausreichend groß ist, können sich die Frequenzen vorteilhafterweise außerhalb der jeweiligen Kohärenzbandbreiten befinden. Die Kohärenzbandbreite beschreibt die ungefähre maximale Bandbreite bzw. Frequenzintervall, in dem zwei Frequenzen eine vergleichbare oder korrelierte Dämpfung erfahren. Durch die unterschiedlichen Kohärenzbandbreiten sind die Frequenzen vorteilhafterweise unterschiedlichen Dämpfungen bzw. Fading-Effekten unterworfen. Beispielsweise können bei einem Betrieb mit zwei unterschiedlichen Frequenzen die Frequenzen 868 MHz und 2,4 GHz verwendet werden. Die Frequenz 2,4 GHz ist z. B. um einen Faktor größer 2 größer als die Frequenz 868 MHz.

Vorteilhafterweise kann ein Abstand d zwischen mindestens zwei der m Antennen mindestens der halben Wellenlänge mindestens eines eingehenden Signals entsprechen. Der Fehler bei der Bestimmung des Einfallswinkels (AOA) wird umso größer, je näher zwei der m Antennen zueinander angeordnet sind. Zudem ist es von Vorteil, wenn sich die Abstände der m Antennen möglichst nahe an den Wellenlängen der eingehenden Signale befinden. Beispielsweise hat das Frequenzband um 868 MHz eine Wellenlänge von $\lambda \approx 34,5$ cm und das Frequenzband um 2,4 GHz eine Wellenlänge von $\lambda \approx$ 12,2 cm. Für niedrigere Frequenzbänder, wie z. B. für das Frequenzband um 868 MHz wäre somit ein möglichst großer Abstand d wünschenswert. Ein großer Abstand d, welcher insbesondere größer als die Wellenlänge des höheren Frequenzbandes ist, kann zu Mehrdeutigkeiten im höheren Frequenzband führen. Beispielsweise kann ein für das Frequenzband um 868 MHz gewählter Abstand d zu Mehrdeutigkeiten beim Frequenzband um 2,4 GHz führen. Es besteht allerdings die Möglichkeit, diese Mehrdeutigkeiten durch die Verwendung mehrerer Frequenzbänder in einem Multiband-Verfahren eindeutig aufzulösen.

Zweckmäßigerweise kann die elektrische Länge der m Antennen unterschiedlich sein und die Kompensation der unterschiedlichen elektrischen Längen der m Antennen in den Signalverarbeitungsmitteln durchgeführt werden. Sofern die elektrischen Längen der m Antennen unterschiedlich sind, ist es nicht notwendig diese hardwaretechnisch, wie beispielsweise durch Verzögerungsstrecken (delay lines) zu kompensieren. Diese Verzögerungsstrecken könnten je nach gewählter Frequenz recht lange ausfallen, wodurch eine Verwendung in einem kompakten Gerät nicht möglich wäre. Durch die Kompensation in den Signalverarbeitungsmitteln haben unterschiedliche elektrische Längen der m Antennen keine negativen Auswirkungen auf Größe eines Geräts, in welchem das erfindungsgemäße Verfahren umgesetzt wird.

Um die Kosten gering zu halten können Antennen auf einer Leiterplatte (printed circuit board antenna, PCB antenna) verwendet werden. Da auf einer Leiterplatte der Platz für mögliche Verzögerungsstrecken begrenzt ist, bietet die Kompensation in den Signalverarbeitungsmitteln eine Möglichkeit zur Minimierung der Kosten.

Es besteht die Möglichkeit, dass zum Messen eines Einfallswinkels (AOA) für mindestens 2 der m Antennen eine Schätzung des Winkels vorgesehen ist. Für jeweils 2 der m Antennen kann die Phasendifferenz $\Delta\varphi_{ij}$ der eingehenden Signale berechnet werden. Der Einfallswinkel kann entsprechend für 2 Antennen durch

$$\psi_{ij} = \arcsin\left(\frac{\Delta\varphi_{ij}\cdot\lambda}{\pi\cdot\Delta d}\right)$$

berechnet werden, wobei $\Delta d$ = $d_{ij}$ der Abstand zweier Antennen ist. Somit können die individuellen Einfallswinkel für mehrere bzw. alle Paarungen der m Antennen berechnet werden und anschließend mittels einer Schätzung, wie beispielsweise durch die Bestimmung des Mittelwerts, der resultierende Einfallswinkel berechnet werden.

Besonders zweckmäßig ist es, wenn die Schätzung des Winkels die Methode der kleinsten Quadrate umfasst. Aus den bestimmten individuellen Einfallswinkeln für mehrere bzw. alle Paarungen der m Antennen kann der resultierende Einfallswinkel mittels der Methode der kleinsten Quadrate berechnet werden.

Nebengeordnet beansprucht die vorliegende Erfindung auch eine Einrichtung, welche gemäß einem Verfahren nach mindestens einem der Verfahrensansprüche 1 bis 8 betrieben wird. Die Einrichtung umfasst hierfür m voneinander getrennte Antennen, wobei m eine ganze Zahl größer eins ist, Schaltmittel sowie eine Empfangseinrichtung, wobei die Antennen über Schaltmittel mit der Empfangseinrichtung gekoppelt sind. Die Schaltmittel umfassen elektronische Mittel zum sequentiellen Zuführen des eingehenden Signals, wie es an den m Antennen empfangen wird, an die Empfangseinrichtung, wobei eine Abtastung mit einer Abtastrate und Zykluszeit in sich wiederholenden Zyklen des eingehenden Signals, wie es an den m Antennen empfangen wird, durch die Empfangseinrichtung vorgenommen wird Die Empfangseinrichtung umfasst Mittel zur Erzeugung von Basisbandsignalen mit In-Phase-Komponente und mit Quadraturkomponente aus dem eingehenden Signal und zur Weiterleitung dieser an je einen Analog-Digital-Wandler, um digitalisierte Abtastungen für jede der m Antennen in jedem Zyklus bereitzustellen. Ferner sind Signalverarbeitungsmittel enthalten, die mit dem jeweiligen Analog-Digital-Wandler gekoppelt sind und dazu ausgelegt sind, die digitalisierten Abtastungen zu analysieren und den Einfallswinkel des eingehenden Signals zu bestimmen, wobei die Abtastrate des Signalverarbeitungsmittels kleiner ist als die Anzahl der Antennen m multipliziert mit der Mindestabtastrate, die zur eindeutigen Rekonstruktion der Eingangssignale der einzelnen m Antennen notwendig ist und der entstehende Phasenfehler durch Mehrfachabtastung mindestens einer Antenne und Signalverarbeitung durch ein statistisches Verfahren kompensiert wird. Erfindungsgemäß umfasst das statistische Verfahren die Verwendung eines gleichmäßigen besten erwartungstreuen Schätzers.

Vorteilhafterweise kann die Einrichtung durch eine autarke Energiequelle betrieben werden. Das erfindungsgemäße Verfahren ermöglicht es, die Einrichtung derart auszulegen, dass besonders energiesparende Komponenten verwendet werden können. Somit ist es möglich, die Einrichtung über einen längeren Zeitraum autark mit Energie zu versorgen. Die Einrichtung kann dadurch auch an Orten betrieben werden, welche keinen direkten Stromanschluss bieten, wodurch beim Betriebsort ein hoher Grad an Flexibilität gegeben ist.

Zweckmäßigerweise kann die Einrichtung Teil eines Echtzeit-Lokalisierungs-Systems sein. Die Echtzeit-Lokalisierung beschreibt die Bestimmung des Ortes eines Objekts an einem zunächst unbekannten Ort.

Vorteilhafterweise kann die Einrichtung ein System-on-a-Chip (SoC) umfassen, welches die Empfangseinrichtung und/oder die Signalverarbeitungsmittel umfasst. Dadurch kann die Einrichtung kleiner dimensioniert werden und gleichzeitig der Energieverbrauch verringert werden. Zudem kann die Produktion vereinfacht und kostengünstiger gestaltet werden, da weniger einzelne Komponenten verbaut werden.

Nebengeordnet beansprucht die vorliegende Erfindung auch eine Anordnung zur Lokalisierung mindestens eines mobilen Senders, insbesondere eines Smartphones oder eines Wearables, per Funk umfassend mindestens eine Einrichtung gemäß mindestens einem der Ansprüche 9 bis 12. Vorteilhafterweise kann die Anordnung mindestens zwei vorzugsweise mindestens drei Einrichtungen gemäß mindestens einem der Ansprüche 9 bis 12 umfassen. In der Anordnung ist es möglich den Einfallswinkel eines vom mobilen Sender ausgesendeten Signals an den Einrichtungen zu bestimmen. Durch Triangulation der verschiedenen Einfallswinkel kann die Position des mobilen Senders bestimmt werden. Die absoluten Positionen der Einrichtungen bzw. die relativen Positionen der Einrichtungen bezüglich des Raums sind dabei bekannt.

Zweckmäßigerweise kann die Anordnung eine zentrale Datenverarbeitungseinheit umfassen, welche die ermittelten Einfallswinkel auswertet. Die Auswertung kann dabei die Positionsbestimmung des mobilen Senders mittels Triangulation umfassen. Es besteht die Möglichkeit, dass mindestens eine Einrichtung als zentrale Datenverarbeitungseinheit betrieben wird. Die Aufgaben der zentralen Datenverarbeitungseinheit können somit von mindestens einer der Einrichtungen übernommen werden. So kann beispielsweise eine Einrichtung, welche gerade keine Messungen durchführt, ausgewählt werden, um die ermittelten Einfallswinkel weiter auszuwerten.

Vorteilhafterweise kann die Anordnung einen mobilen Sender, insbesondere ein Smartphone oder ein Wearable, umfassen, wobei eine Software, insbesondere in Form einer App, auf dem mobilen Sender ausführbar ist, welche die Funktionalität zur Lokalisierung des mobilen Senders mithilfe der Anordnung gemäß Anspruch 13 bereitstellt. Diese Software kann die Aussendung von Funksignalen vom mobilen Sender an die Einrichtungen steuern. Sofern die Position des mobilen Senders durch die Einrichtungen in der Anordnung ermittelt wurden, kann diese Position an den mobilen Sender gesendet werden, wo die Software die Positionsdaten entgegennimmt und beispielsweise für einen Benutzer aufbereitet.

Beschreibung der Erfindung anhand von Ausführungsbeispielen

Zweckmäßige Ausgestaltungen der vorliegenden Erfindung werden anhand von Zeichnungsfiguren nachstehend näher erläutert. Es zeigen:

Fig. 1 eine Übersicht einer Anordnung zur Lokalisierung eines mobilen Senders;

Fig. 2 eine vereinfachte schematische Darstellungsweise von n Antennen mit einem eingehenden Signal;

Fig. 3 ein Beispiel für die Triangulation in zwei Dimensionen;

Fig. 4 eine stark vereinfachte schematische Darstellungsweise des Messkonzepts;

Fig. 5 eine stark vereinfachte schematische Darstellungsweise des RF front-ends;

Fig. 6 eine vereinfachte schematische Darstellungsweise der Abstände der Antennen zu ihren Nachbarantennen;

Fig. 7 ein Blockschaltbild eines Direktmischempfängers;

Fig. 8 ein Blockschaltbild eines Superheterodynempfängers; und

Fig. 9 eine vereinfachte schematische Darstellungsweise der Phase eines Basisbandsignals ohne und mit unwrappter Phase.

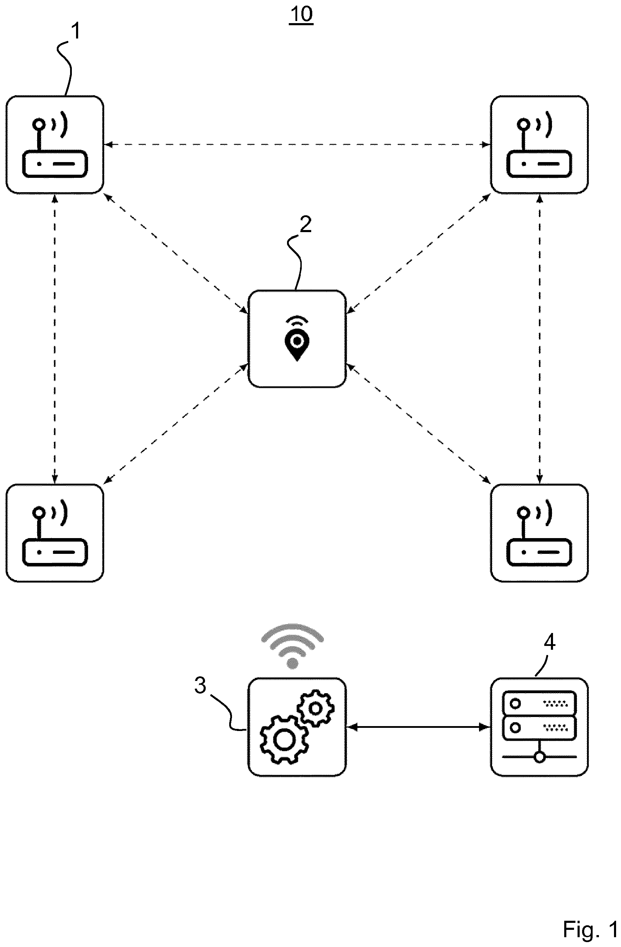

In Fig. 1 ist eine Übersicht einer Anordnung zur Lokalisierung eines mobilen Senders gezeigt. Diese Übersicht zeigt das Konzept der vorliegenden Erfindung. In dieser Ausgestaltung umfasst die Anordnung vier Einrichtungen 1, einen mobilen Sender 2 sowie eine zentrale Datenverarbeitungsanlage 3, welche zusätzlich mit einem Server 4 in Verbindung steht.

Alle Einrichtungen 1 kommunizieren miteinander über eine Funkverbindung. Zudem ist jeder Einrichtung 1 eine einzigartige ID zugeordnet, durch die sich die jeweilige Einrichtung 1 identifizieren kann. Die Anzahl an Einrichtungen 1, die notwendig sind, um einen entsprechenden mobilen Sender 2 zu lokalisieren ist von der jeweiligen Umgebung abhängig und muss empirisch bewertet werden. Es ist demnach vorteilhaft zur Bestimmung der Anzahl an Einrichtungen 1, ein genaueres Wissen über die Umgebung zu haben. Beispielsweise können mögliche Hindernisse für die verwendeten Funkfrequenzen als Störer wirken.

Der mobile Sender 2 sendet Funksignale aus, welche von den einzelnen Einrichtungen 1 als eingehende Signale empfangen werden. Durch die eingehenden Signale berechnen die Einrichtungen 1 gemäß dem erfindungsgemäßen Verfahren den Einfallswinkel (AOA) $\psi$. Die Berechnung der Position des mobilen Senders 2 im Raum bzw. relativ zu den installierten Einrichtungen 1 wird in einer zentralen Datenverarbeitungsanlage 3 durchgeführt. Diese Berechnungen können auch in einer der Einrichtungen 1 selbst durchgeführt werden, so dass keine zusätzliche separate zentrale Datenverarbeitungsanlage 3 notwendig ist. Sofern die Berechnung durch eine der Einrichtungen 1 durchgeführt wird, kann hierfür eine der Einrichtungen 1 automatisch ausgewählt werden, welche beispielsweise in Reichweite ist und zu jenem Zeitpunkt nicht mit der Durchführung von Messungen beschäftigt ist, so dass Rechenkapazitäten zur Verfügung stehen.

Damit die Berechnungen der Position des mobilen Senders 2 genau sind, müssen zudem die genauen Positionen der Einrichtungen 1 bekannt sein. Dabei können z. B. die jeweiligen Positionen der Einrichtungen 1 bezüglich eines bestimmten Referenzpunktes bekannt sein. Eine weitere Möglichkeit bestehet darin, dass die Position einer ersten Einrichtung 1 bezüglich eines Referenzpunktes bekannt ist und von den übrigen Einrichtungen 1 jeweils die relative Position zur ersten Einrichtung 1. So können beispielsweise anschließend Grundrisse des Gebäudes auf die Position des mobilen Senders 2 überlagert werden.

Ferner kann ein Server 4 vorgesehen sein, welcher mit der zentralen Datenverarbeitungsanlage 3 bzw. mit der Einrichtung 1, welche die Berechnungen durchführt, in Verbindung steht und die gemessenen Positionen des mobilen Senders 2 empfängt und abspeichert für eine weitergehende Auswertung. Beispielsweise könnte ein Lokalisierungs-Backend betrieben werden, welche Zugriff auf die aktuellen und vergangenen Positionen des mobilen Senders 2 ermöglicht.

Das System kann dabei so ausgelegt sein, dass die Positionsbestimmung durch den mobilen Sender 2 ausgelöst wird. Entweder auf Benutzerwunsch, z. B. über einen Tastendruck, oder periodisch zu bestimmten Zeitpunkten.

Um eine genaue Positionsberechnung zu ermöglichen, können die Messungen der Phasen und die daraus bestimmten Einfallswinkel mehrfach durchgeführt werden. Darüber hinaus können zur Behebung des Fadings, der Abschattung und der Mehrwegeausbreitung Messungen in zwei Frequenzbändern nacheinander durchgeführt werden.

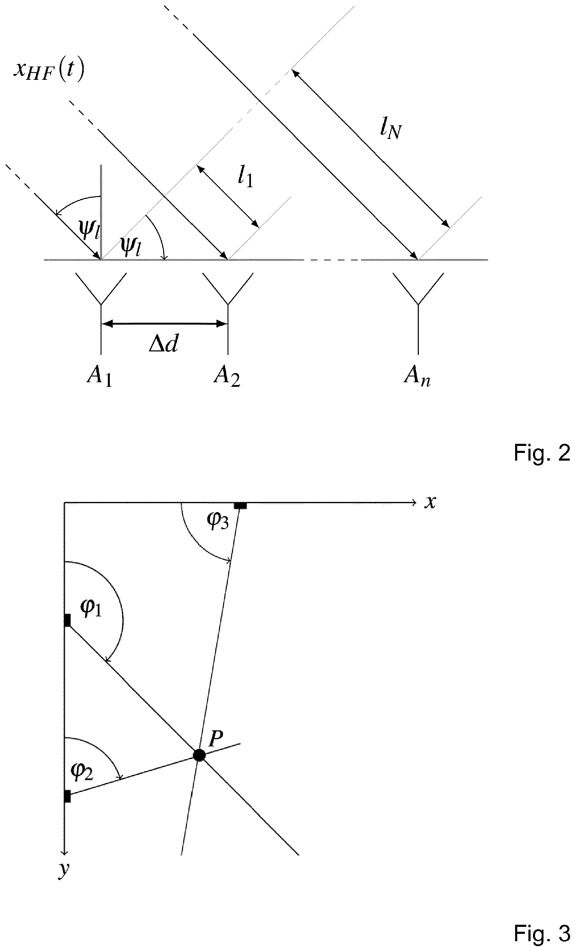

In Fig. 2 ist eine vereinfachte schematische Darstellungsweise von n Antennen mit einem eingehenden Signal $x_{HF}$ gezeigt. Eine Möglichkeit zur Messung des Einfallswinkels bietet die Phaseninterferometrie. Bei dieser Technik wird die Phase eines eingehenden Signals auf unterschiedlichen Antennen gemessen. Hierfür ist eine Anordnung von Antennen notwendig, welche mit einem bekannten Abstand voneinander entfernt angeordnet sind. Der Einfallswinkel $\psi$ des eingehenden Signals $x_{HF}$ kann durch die Beziehung $\sin \psi = \frac{l}{\Delta d}$ berechnet werden. Sofern der Abstand zwischen zwei Antennen $\Delta d$ kleiner ist als die Wellenlänge des Signals $\lambda_{HF} > \Delta d$ kann der Wegunterschied $l$ durch die Phasendifferenz $\Delta \varphi$ zweier Signale von zwei Antennen mit $l = \frac{\Delta \varphi}{\pi} \lambda_{HF}$ eindeutig bestimmt werden. Der Einfallswinkel der zwei Antennen A1 und A2 kann durch

$$\psi = \arcsin\left(\frac{\Delta \varphi \cdot \lambda_{HF}}{\pi \cdot \Delta d}\right)$$

entsprechend berechnet werden.

In einem dreidimensionalen Raum ist es nicht möglich eine Position (x,y,z) allein durch eine Winkelmessungen in der $\varphi$-Richtung entsprechend den Kugelkoordinaten zu bestimmen. Schnittpunkte dieser Winkelmessungen werden immer unabhängig der z-Achse sein. Allerdings ist eine Positionsbestimmung entlang der z-Achse in geschlossenen Räumen meist nicht notwendig, da lediglich geringe Höhenunterschiede möglich sind. Eine Möglichkeit bestünde allerdings darin, die $\theta$-Richtung entsprechend der Kugelkoordinaten zu messen, wenn die Einrichtungen 1 in verschiedenen Rotationen angebracht werden. Ein Beispiel für eine Triangulation eines Punktes bzw. eines Objektes in zwei Dimensionen ist in Fig. 3 dargestellt. Für die Triangulation in zwei Dimensionen sind mindestens zwei Winkel $\varphi_1$ und $\varphi_2$ notwendig. Der Winkel $\varphi$ ist dabei ein Wert zwischen -90° < 0° < 90°, wobei 0° in Richtung der x-Achse zeigt. Sofern die Winkelmessungen $\varphi$ fehlerbehaftet sind, kann es notwendig sein weitere Winkelmessungen durch weitere Einrichtungen 1 durchzuführen, wie dies durch die Winkelmessung $\varphi_3$ angedeutet ist.

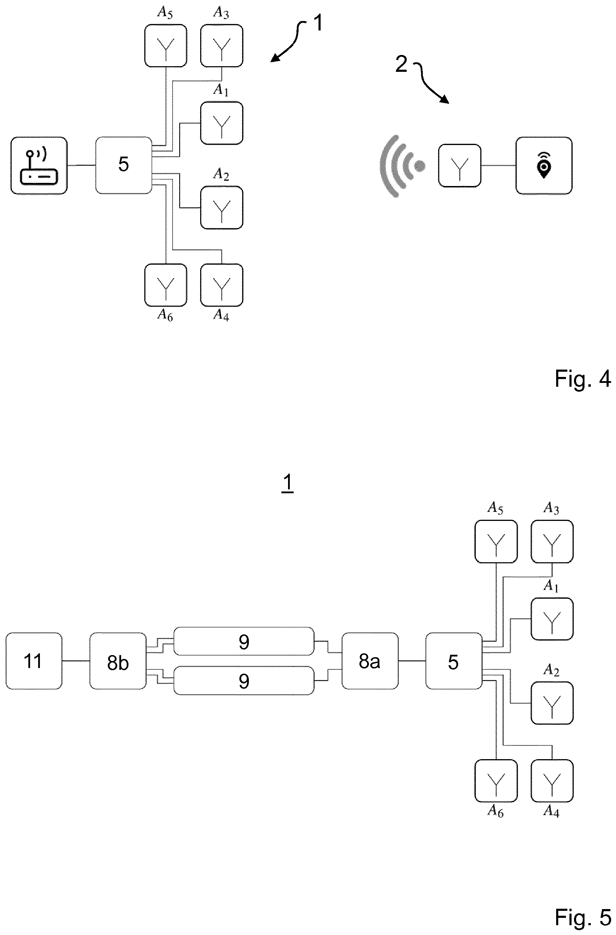

In Fig. 4 ist eine stark vereinfachte schematische Darstellungsweise des Messkonzepts gezeigt. In der dargestellten Ausgestaltung ist eine Einrichtung 1 mit sechs Antennen A1 bis A6, Schaltmitteln 5 sowie weiteren Verarbeitungsmitteln, welche die Empfangseinrichtung 6 und die Signalverarbeitungsmittel 7 umfassen kann. Die einzelnen Antennen A1 bis A6 können von den Schaltmitteln 5 beliebig angewählt werden. Vor der eigentlichen Messung kann zudem ein Sicherheitstimer $t_{start}$ vorgesehen sein. Während dieser Zeit können alle beteiligten Geräte, wie z. B. weitere Einrichtungen 1 in einen Modus zum Messen wechseln. Der mobile Sender 2 sendet eine Trägerwelle auf einer zuvor festgelegten Frequenz aus. Nach der Verzögerung $t_{start}$ beginnt die Einrichtung 1 mit dem Messprozess. Hierbei wird jede Antenne beispielsweise für ein vorher festgelegtes Messintervall $t_m$ angewählt: Antenne A1 wird für die Zeit 2 · $t_m$ angewählt und die weiteren Antennen A2 bis A6 jeweils für die Zeit $t_m$. Nach dem Ablauf einer Zeit $t_{stop}$ wird die Messung in der Einrichtung 1 bzw. in weiteren Einrichtungen 1 gestoppt. Die Zeit $t_{stop}$ ist dabei wesentlich länger als 7 · $t_m$ gewählt, um Probleme mit der Synchronisation aus dem Weg zu gehen. Der mobile Sender 2 wartet anschließend auf eine Bestätigung der Messung durch alle beteiligten Einrichtungen 1. Sofern keine oder nur eine teilweise Bestätigung durch die Einrichtungen 1 erfolgt, wird die Messung als fehlerhaft betrachtet.

Eine stark vereinfachte schematische Darstellungsweise des RF front-ends ist in Fig. 5 gezeigt. In dieser Ausgestaltung sind sechs Antennen A1 bis A6 gezeigt, welche mit den Schaltmitteln 5 verbunden sind. Den Schaltmitteln 5 ist ein erster Wechselschalter 8a nachgeschaltet. Dieser Wechselschalter 8a ist als einpoliger Wechselschalter (SPDT, single pole double throw) ausgelegt. Anschließend wird eine Impedanzanpassung für unterschiedliche Frequenzbänder durchgeführt. Beispielsweise eine Anpassung für zwei verschiedene Frequenzbänder, wie beispielsweise 2,4 GHz und Sub-1 GHz. Nach der Impedanzanpassung und vor dem System-on-a-Chip 11 ist ein zweiter Wechselschalter 8b geschaltet, welcher als differentieller zweipoliger Wechselschalter (DPxDT, double pole double throw crossed) ausgestaltet ist. Es ist vorteilhaft, dass alle Schalter eine minimale Einfügedämpfung aufweisen, um eine hohe Dämpfung zu vermeiden und damit das Signal-to-Noise Ratio (SNR, zu Deutsch: Signal-Rausch-Verhältnis) hoch zu halten. Auf dem System-on-a-Chip 11 wird die weitere Datenverarbeitung durchgeführt, so dass das System-on-a-Chip 11 die Empfangseinrichtung 6 und die Signalverarbeitungsmittel 7 umfassen kann.

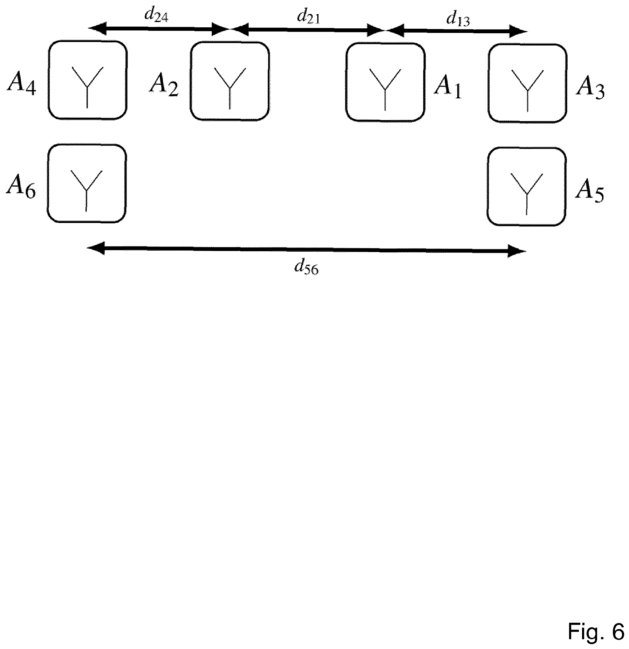

In Fig. 6 ist eine vereinfachte schematische Darstellungsweise der Abstände der Antennen zu ihren Nachbarantennen gezeigt. In dieser Ausgestaltung sind sechs Antennen A1 bis A6 dargestellt mit den entsprechenden Abständen $d_{ij}$, wobei $i,j$ die betreffende Antenne A1 bis A6 bezeichnet. Um die Kosten gering zu halten können PCB Antennen verwendet werden. Ferner werden in der vorliegenden Ausgestaltung die Frequenzen 2,4 GHz und 868 MHz verwendet. Die Antennen werden so angebracht, dass eindeutige Messungen des Einfallswinkels in beiden verwendeten Frequenzbändern möglich sind. Das niedrige Frequenzband um 868 MHz hat eine Wellenlänge von $\lambda \approx 34{,}5$ cm. Das hohe Frequenzband um 2,4 GHz hat eine Wellenlänge von $\lambda \approx 12{,}2$ cm. Somit können die Abstände $d_{ij}$ so gewählt werden, dass mehrfache Messungen in den Frequenzbändern möglich sind. So ist es vorteilhaft, wenn ein Abstand $d_{ij}$ zwischen mindestens zwei der Antennen A1 bis A6 mindestens der halben Wellenlänge $\lambda$ mindestens eines eingehenden Signals entspricht. Der Abstand zwischen den Antennen A5 und A6 kann beispielsweise mit $d_{56} = 17{,}25$ cm gewählt sein, was der halben Wellenlänge des hohen Frequenzbandes um 2,4 GHz entspricht. Der Einfallswinkel kann entsprechend für 2 Antennen durch

$$\psi_{ij} = \arcsin\left(\frac{\Delta\varphi_{ij} \cdot \lambda}{\pi \cdot \Delta d}\right)$$ berechnet werden, wobei $\Delta d = d_{ij}$.

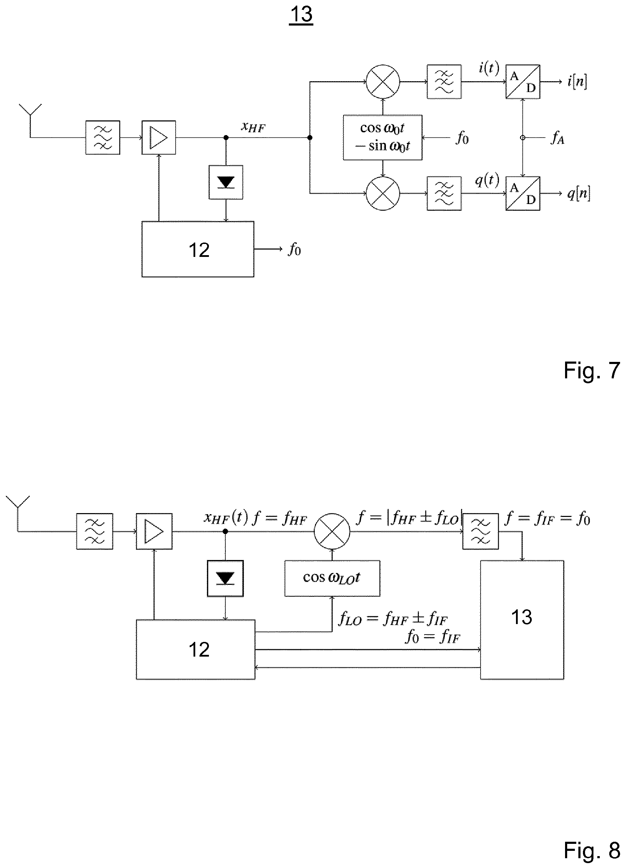

In Fig. 7 ist ein Blockschaltbild eines Direktmischempfängers gezeigt, wie er in der Einrichtung 1 vorgesehen ist. Der Direktmischempfänger umfasst vor dem IQ Demodulator einen Bandpassfilter, welcher das Band vorauswählt, und einen programmierbaren Verstärker. Nach dem IQ Demodulator sind zwei Analog-Digital-Wandler (ADC) geschaltet jeweils für das In-Phase-Signal und das Quadratur-Signal. Die Kontrolleinheit 12 stellt den Empfänger auf eine Trägerfrequenz ein, indem die Frequenz des lokalen Oszillators $f_0$ entsprechend gesetzt wird.

Auf Systemen, welche als System-on-a-Chip ausgestaltet sind, können Superheterodynempfänger wie in Fig. 8 gezeigt, verwendet werden. Hierbei wird das $x_{HF}$ Signal zunächst runtergemischt auf eine niedrigere Frequenz $f_{IF}$ und wird anschließen demoduliert. Der Grund hierfür ist, dass die maximal mögliche Trägerfrequenz $f_0$ durch die benötigte Genauigkeit des IQ Demodulators limitiert ist und gegebenenfalls bei höheren Frequenzen nicht garantiert werden kann.

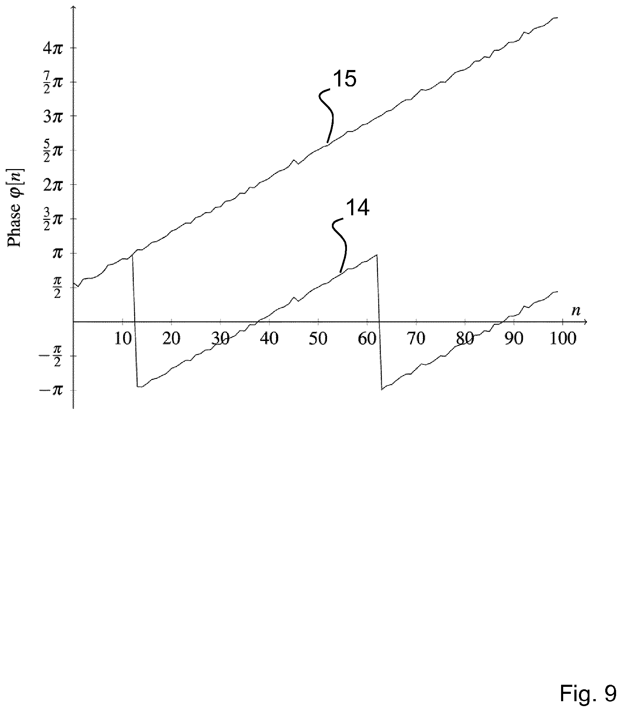

In Fig. 9 ist die Phase eines Basisbandsignals dargestellt. Die Phase ohne Unwrapping 14 wird durch einen Unwrapping-Algorithmus in die Phase mit Unwrapping 15 umgewandelt. Bei der Umwandlung kann es allerdings zu Problemen mit Unstetigkeiten kommen, welche beispielsweise durch die wrapping-Eigenschaften der arctan2-Funktion hervorgerufen werden. Hierfür kann ein Unwrapping-Algorithmus verwendet werden, welcher die Unstetigkeiten in der Phase erkennt und behebt. Phasensprünge um $-2\pi$ werden somit erkannt und entsprechend durch Addition von $2\pi$ auf die folgenden Abtastungen der Phase behoben.

## BEZUGSZEICHENLISTE

1 Einrichtung
2 mobiler Sender
3 zentrale Datenverarbeitungseinheit
4 Server
5 Schaltmittel
6 Empfangseinrichtung
7 Signalverarbeitungsmittel
8 Wechselschalter
9 Impedanzanpassung
10 Anordnung
11 System-on-a-Chip
12 Kontrolleinheit
13 Direktmischempfänger
14 Phase ohne Unwrapping
15 Phase mit Unwrapping

$t_z$ Zykluszeit
A Antenne

## Patentansprüche

1. Verfahren zum Messen eines Einfallswinkels (AOA) eines eingehenden Signals unter Verwendung von m voneinander getrennten Antennen (A), wobei m eine ganze Zahl größer eins ist, wobei die Antennen (A) über Schaltmittel (5) mit einer einzigen Empfangseinrichtung (6) gekoppelt sind,

wobei die Schaltmittel (5) elektronische Mittel zum sequentiellen Zuführen des eingehenden Signals, wie es an den m Antennen (A) empfangen wird, an die Empfangseinrichtung (6) umfassen,

wobei eine Abtastung mit einer Abtastrate und Zykluszeit in sich wiederholenden Zyklen des eingehenden Signals, wie es an den m Antennen (A) empfangen wird, vorgenommen wird, wobei die Empfangseinrichtung (6) Mittel zur Erzeugung von Basisbandsignalen mit In-Phase-Komponente und mit Quadraturkomponente aus dem eingehenden Signal und zur Weiterleitung dieser an je einen Analog-Digital-Wandler umfasst, um digitalisierte Abtastungen für jede der m Antennen (A) in jedem Zyklus bereitzustellen;

wobei Signalverarbeitungsmittel (7) enthalten sind, die mit dem jeweiligen Analog-Digital-Wandler gekoppelt sind, um die digitalisierten Abtastungen zu analysieren und den Einfallswinkel des eingehenden Signals zu bestimmen, wobei der entstehende Phasenfehler durch Mehrfachabtastung mindestens einer Antenne (A) und Signalverarbeitung durch ein statistisches Verfahren kompensiert wird und die Abtastrate des Signalverarbeitungsmittels (7) kleiner ist als die Anzahl m der Antennen (A) multipliziert mit der Mindestabtastrate, die zur eindeutigen Rekonstruktion der Eingangssignale der einzelnen m Antennen (A) notwendig ist, **dadurch gekennzeichnet, dass** das statistische Verfahren die Verwendung eines gleichmäßigen besten erwartungstreuen Schätzers umfasst.

2. Verfahren nach mindestens einem der vorhergehenden Ansprüche, wobei in den Signalverarbeitungsmitteln (7) eine Phasenenthüllung (phase unwrapping) durchgeführt wird.

3. Verfahren nach mindestens einem der vorhergehenden Ansprüche, wobei eingehende Signale unterschiedlicher Frequenzen vorgesehen sind, wobei sich insbesondere die Frequenzen außerhalb der jeweiligen Kohärenzbandbreiten befinden.

4. Verfahren nach Anspruch 3, wobei sich die Frequenzen mindestens um einen Faktor 2, insbesondere einen Faktor 3, insbesondere einen Faktor 4 unterscheiden, wobei sich insbesondere die Frequenzen außerhalb der jeweiligen Kohärenzbandbreiten befinden.

5. Verfahren nach mindestens einem der vorhergehenden Ansprüche, wobei ein Abstand d zwischen mindestens zwei der m Antennen (A) mindestens der halben Wellenlänge mindestens eines eingehenden Signals entspricht.

6. Verfahren nach mindestens einem der vorhergehenden Ansprüche, wobei die elektrische Länge der m Antennen (A) unterschiedlich ist und die Kompensation der unterschiedlichen elektrischen Längen der m Antennen (A) in den Signalverarbeitungsmitteln (7) durchgeführt wird.

7. Verfahren nach mindestens einem der vorhergehenden Ansprüche, wobei zum Messen eines Einfallswinkels (AOA) für mindestens 2 der m Antennen (A) eine Schätzung des Winkels vorgesehen ist.

8. Verfahren nach Anspruch 7, wobei die Schätzung des Winkels die Methode der kleinsten Quadrate umfasst.

9. Einrichtung (1), umfassend

m voneinander getrennte Antennen (A), wobei m eine ganze Zahl größer eins ist, Schaltmittel (5) sowie eine Empfangseinrichtung (6), wobei die Antennen (A) über die Schaltmittel (5) mit der Empfangseinrichtung (6) gekoppelt sind, wobei die Schaltmittel (5) elektronische Mittel zum sequentiellen Zuführen des eingehenden Signals, wie es an den m Antennen (A) empfangen wird, an die Empfangseinrichtung (6) umfassen, wobei

eine Abtastung mit einer Abtastrate und Zykluszeit in sich wiederholenden Zyklen des eingehenden Signals, wie es an den m Antennen (A) empfangen wird, durch die Empfangseinrichtung (6) vorgenommen wird, wobei

die Empfangseinrichtung (6) Mittel zur Erzeugung von Basisbandsignalen mit In-Phase-Komponente und mit Quadraturkomponente aus dem eingehenden Signal und zur Weiterleitung dieser an je einen Analog-Digital-Wandler umfasst, um digitalisierte Abtastungen für jede der m Antennen (A) in jedem Zyklus bereitzustellen, wobei

Signalverarbeitungsmittel (7) enthalten sind, die mit dem jeweiligen Analog-Digital-Wandler gekoppelt sind und dazu ausgelegt sind, die digitalisierten Abtastungen zu analysieren und den Einfallswinkel des eingehenden Signals zu bestimmen, wobei

der entstehende Phasenfehler durch Mehrfachabtastung mindestens einer Antenne und Signalverarbeitung durch ein statistisches Verfahren kompensiert wird und

die Abtastrate des Signalverarbeitungsmittels (7) kleiner ist als die Anzahl m der Antennen (A) multipliziert mit der Mindestabtastrate, die zur eindeutigen Rekonstruktion der Eingangssignale der einzelnen m Antennen (A) notwendig ist, **dadurch gekennzeichnet, dass** die Einrichtung gemäß einem Verfahren nach mindestens einem der vorhergehenden Ansprüche betrieben wird und das statistische Verfahren die Verwendung eines gleichmäßigen besten erwartungstreuen Schätzers umfasst.

10. Einrichtung (1) nach Anspruch 9, wobei diese durch eine autarke Energiequelle betrieben wird.

11. Einrichtung (1) nach mindestens einem der Ansprüche 9 oder 10, wobei diese Teil eines Echtzeit-Lokalisierungs-Systems ist

12. Einrichtung (1) nach mindestens einem der Ansprüche 9 bis 11, wobei diese ein System-on-a-Chip (SoC) (11) umfasst, welches die Empfangseinrichtung (6) und/oder die Signalverarbeitungsmittel (7) umfasst.

13. Anordnung (10) zur Lokalisierung mindestens eines mobilen Senders (2), insbesondere eines Smartphones oder eines Wearables, per Funk umfassend mindestens eine Einrichtung (1) gemäß mindestens einem der Ansprüche 9 bis 12, wobei die Anordnung (10) eine zentrale Datenverarbeitungseinheit (3) umfasst, welche die ermittelten Einfallswinkel auswertet.

14. Anordnung (10) nach Anspruch 13, wobei mindestens eine der genannten mindestens einen Einrichtung (1) als zentrale Datenverarbeitungseinheit (3) betrieben wird.

15. Anordnung (10) nach Anspruch 13 oder 14, wobei die Anordnung (10) mindestens einen mobilen Sender (2), insbesondere ein Smartphone oder ein Wearable, umfasst, wobei eine Software, insbesondere in Form einer App, auf dem mobilen Sender (2) ausführbar ist, welche die Funktionalität zur Lokalisierung des mobilen Senders (2) mithilfe der Anordnung (10) bereitstellt, wobei die Software die Aussendung von Funksignalen vom mobilen Sender (2) an die mindestens eine Einrichtung (1) steuert und wobei die Software Positionsdaten von der mindestens einen Einrichtung (1) entgegennimmt.

**Claims**

1. Method of measuring an angle of attack (AOA) of an incoming signal using m separate antennas (A), where m is an integer greater than one, wherein antennas (A) are coupled with a single receiving device (6) via switching means (5),

   wherein the switching means (5) comprise electronic means for sequentially supplying the incoming signal, as received at the m antennas (A), to the receiving device (6),
   wherein a sampling of the incoming signal as received at the m antennas (A) has a sampling rate and cycle time being performed in repetitive cycles,
wherein the receiving device (6) comprises means for generating baseband signals having an in-phase component and a quadrature component from the incoming signal and for forwarding them to an analog-to-digital converter to provide digitized samples for each of the m antennas (A) in each cycle;
wherein signal processing means (7) are included, which are coupled to the respective analog-to-digital converter in order to analyze the digitized samples and to determine the angle of attack of the incoming signal, wherein
the resulting phase error is compensated by a multiple sampling of at least one antenna (A) and signal processing by a statistical method and
the sampling rate of the signal processing means (7) is smaller than the number m of the antennas (A) multiplied by the minimum sampling rate, which is necessary to clearly reconstruct the input signals of the individual m antennas (A),
**characterized in that**
the statistical method comprises the use of a uniformly best unbiased estimator.

2. Method according to at least one of the preceding claims, wherein a phase unwrapping is performed in the signal processing means (7).

3. Method according to at least one of the preceding claims, wherein incoming signals with different frequencies are provided, wherein the frequencies are, in particular, outside the respective coherence bandwidths.

4. Method according to claim 3, wherein the frequencies differ by at least a factor of 2, in particular a factor of 3, in particular a factor of 4, with the frequencies being, in particular, outside the respective coherence bandwidths.

5. Method according to at least one of the preceding claims, wherein a distance d between at least two of the m antennas (A) corresponds to at least half the wavelength of at least one incoming signal.

6. Method according to at least one of the preceding claims, wherein the electrical length of the m antennas (A) is different and in that the compensation of the different electrical lengths of the m antennas (A) is performed in the signal processing means (7).

7. Method according to at least one of the preceding claims, wherein an estimate of the angle is provided for measuring an angle of attack (AOA) for at least 2 of the m antennas (A).

8. Method according to claim 7, wherein the estimate of the angle comprises the least-squares method.

9. Device (1), comprises

   m separate antennas (A), wherein m is an integer greater than one,
   switching means (5) and
   a receiving device (6), wherein the antennas (A) are coupled with the receiving device (6) via the switching means (5), wherein
   the switching means (5) comprise electronic means for sequentially supplying the incoming signal, as received by the m antennas (A), to the receiving device (6), wherein
   a sampling of the incoming signal as received at the m antennas (A) having a sampling rate and cycle time being performed by the receiving device (6) in repetitive cycles, wherein
   the receiving device (6) comprises means for generating baseband signals having an in-phase component and a quadrature component from the incoming signal and forwarding the same to each analog-to-digital converter to provide digitized samples for each of the m antennas in each cycle, wherein
   signal processing means (7), which are coupled to the respective analog-to-digital converter, are included and are designed to analyze the digitized samples and determine the angle of attack of the incoming signal, wherein
   the resulting phase error is compensated by multiple sampling of at least one antenna and signal processing by a statistical method and
   the sampling rate of the signal processing means (7) is smaller than the number of m antennas (A) multiplied by the minimum sampling rate, which is necessary to clearly reconstruct the input signals of the individual m antennas (A),
   **characterized in that**
   the device is operated according to a method according to at least one of the preceding claims and the statistical method comprises the use of a uniformly best unbiased estimator.

10. Device (1) according to claim 9, wherein it is operated by a self-sufficient energy source.

11. Device (1) according to at least one of the claims 9 or 10, wherein it is part of a real-time localization system.

12. Device (1) according to at least one of the claims 9 to 11, wherein it comprises a system-on-a-chip (SoC) (11), which comprises the receiving device (6) and/or the signal processing means (7).

13. Arrangement (10) for locating at least one mobile transmitter (2), in particular a smartphone or a wearable, by radio comprising
    at least one device (1) according to at least one of claims 9 to 12, wherein in the device (10) comprises a central data processing unit (3) which evaluates the determined angles of attack.

14. Arrangement (10) according to claim 13, wherein at least one of said at least one device (1) is operated as a central data processing unit (3).

15. Arrangement (10) according to claim 13 or 14, wherein the arrangement (10) comprises at least one mobile transmitter (2), in particular a smartphone or a wearable, wherein a software, in particular in the form of an app, is executable on the mobile transmitter (2), which provides the functionality for localizing the mobile transmitter (2) with the aid of the arrangement (10), wherein the software controls the transmission of radio signals from the mobile transmitter (2) to the at least one device (1) and wherein the software receives positional data from the at least one device (1).

**Revendications**

1. Procédé pour mesurer un angle d'incidence (AOA) d'un signal entrant en utilisant m antennes (A) séparées les unes des autres, m étant un nombre entier supérieur à un, les antennes (A) étant connectées à un dispositif de réception (6) unique par le biais de moyens de commutation (5),

   les moyens de commutation (5) comportant des moyens électroniques servant à l'acheminement séquentiel du signal entrant, tel qu'il est reçu au niveau des m antennes (A), au dispositif de réception (6),
   un échantillonnage avec une fréquence d'échantillonnage et un temps de cycle étant effectué dans des cycles se répétant du signal entrant, tel qu'il est reçu au niveau des m antennes (A),
   le dispositif de réception (6) comportant des moyens destinés à générer des signaux en bande de base avec des composantes en phase et avec des composantes en quadrature à partir du signal entrant et à retransmettre ceux-ci respectivement à un convertisseur analogique/numérique afin de fournir des échantillonnages numérisés pour chacune des m antennes (A) dans chaque cycle ;
   des moyens de traitement de signal (7) étant inclus, lesquels sont connectés avec le convertisseur analogique/numérique respectif afin d'analyser les échantillonnages numérisés et déterminer l'angle d'incidence du signal entrant, l'erreur de phase produite par l'échantillonnage multiple d'au moins une antenne (A) et le traitement du signal étant compensée par un procédé statistique et

la fréquence d'échantillonnage des moyens de traitement de signal (7) étant inférieure au nombre m des antennes (A) multiplié par la fréquence d'échantillonnage minimale qui est nécessaire pour une reconstruction claire des signaux d'entrée des m antennes (A) individuelles, **caractérisé en ce que**

le procédé statistique comprend l'utilisation d'un meilleur évaluateur régulier non biaisé.

2. Procédé selon au moins l'une des revendications précédentes, un déroulement de phase (phase unwrapping) étant effectué dans les moyens de traitement de signal (7).

3. Procédé selon au moins l'une des revendications précédentes, des signaux entrants de différentes fréquences étant présents, les fréquences se trouvant notamment en-dehors des largeurs de bande de cohérence respectives.

4. Procédé selon la revendication 3, les fréquences se différentiant au moins d'un facteur 2, notamment d'un facteur 3, notamment d'un facteur 4, les fréquences se trouvant notamment en-dehors des largeurs de bande de cohérence respectives.

5. Procédé selon au moins l'une des revendications précédentes, un écart d entre au moins deux des m antennes (A) correspondant à au moins la demi-longueur d'onde d'un signal entrant.

6. Procédé selon au moins l'une des revendications précédentes, la longueur électrique des m antennes (A) étant différente et la compensation des longueurs électriques différentes des m antennes (A) étant effectuée dans les moyens de traitement de signal (7).

7. Procédé selon au moins l'une des revendications précédentes, une estimation de l'angle étant prévue en vue de mesurer un angle d'incidence (AOA) pour au moins 2 des m antennes (A).

8. Procédé selon la revendication 7, l'estimation de l'angle comprenant la méthode des plus petits carrés.

9. Dispositif (1), comprenant

m antennes (A) séparées les unes des autres, m étant un nombre entier supérieur à un,

des moyens de commutation (5) et
un dispositif de réception (6), les antennes (A) étant connectées au dispositif de réception (6) par le biais de moyens de commutation (5), les moyens de commutation (5) comportant des moyens électroniques servant à l'acheminement séquentiel du signal entrant, tel qu'il est reçu au niveau des m antennes (A), au dispositif de réception (6),

un échantillonnage avec une fréquence d'échantillonnage et un temps de cycle étant effectué par le dispositif de réception (6) dans des cycles se répétant du signal entrant, tel qu'il est reçu au niveau des m antennes (A), le dispositif de réception (6) comportant des moyens destinés à générer des signaux en bande de base avec des composantes en phase et avec des composantes en quadrature à partir du signal entrant et à retransmettre ceux-ci respectivement à un convertisseur analogique/numérique afin de fournir des échantillonnages numérisés pour chacune des m antennes (A) dans chaque cycle ;

des moyens de traitement de signal (7) étant inclus, lesquels sont connectés avec le convertisseur analogique/numérique respectif et sont conçus pour analyser les échantillonnages numérisés et déterminer l'angle d'incidence du signal entrant,

l'erreur de phase produite par l'échantillonnage multiple d'au moins une antenne et le traitement du signal étant compensée par un procédé statistique et

la fréquence d'échantillonnage des moyens de traitement de signal (7) étant inférieure au nombre m des antennes (A) multiplié par la fréquence d'échantillonnage minimale qui est nécessaire pour une reconstruction claire des signaux d'entrée des m antennes (A) individuelles, **caractérisé en ce que**

le dispositif fonctionne conformément à un procédé selon au moins l'une des revendications précédentes et le procédé statistique comprend l'utilisation d'un meilleur évaluateur régulier non biaisé.

10. Dispositif (1) selon la revendication 9, celui-ci fonctionnant avec une source d'énergie autonome.

11. Dispositif (1) selon au moins l'une des revendications 9 ou 10, celui-ci faisant partie d'un système de localisation en temps réel.

12. Dispositif (1) selon au moins l'une des revendications 9 à 11, celui-ci comportant un système sur puce (SoC) (11), lequel comporte le dispositif de réception (6) et/ou les moyens de traitement de signal (7).

**13.** Arrangement (10) destiné à la localisation d'au moins un émetteur mobile (2), notamment d'un Smartphone ou d'un appareil à porter sur soi, par radio, comprenant au moins un dispositif (1) selon au moins l'une des revendications 9 à 12, l'arrangement (10) comportant une unité de traitement de données (3) centrale qui interprète l'angle d'incidence déterminé.

**14.** Arrangement (10) selon la revendication 13, au moins l'un dudit au moins un dispositif (1) fonctionnant en tant qu'unité de traitement de données (3) centrale.

**15.** Arrangement (10) selon la revendication 13 ou 14, l'arrangement (10) comportant au moins un émetteur mobile (2), notamment un Smartphone ou un appareil à porter sur soi, un logiciel, notamment sous la forme d'une application, étant exécutable sur l'émetteur mobile (2), lequel fournit la fonctionnalité servant à la localisation de l'émetteur mobile (2) à l'aide de l'arrangement (10), le logiciel commandant l'émission de signaux radioélectriques de l'émetteur mobile (2) à l'au moins un dispositif (1) et le logiciel recevant des données de position de la part de l'au moins un dispositif (1) .

<u>10</u>

Fig. 1

Fig. 2

Fig. 3

Fig. 4

Fig. 5

Fig. 6

<u>13</u>

Fig. 7

Fig. 8

Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5497161 A

- US 20180203091 A1